# EUROPEAN PATENT APPLICATION

(11) **EP 4 331 439 A1**
(43) Date of publication of application: **06.03.2024**
(21) Application number: 22796030.9
(22) Date of filing: 19.04.2022
(51) Int. Cl.: A47J 19/06, A47J 19/02

(54) **SEPARATION SCREW AND JUICER USING SAME**

(30) Priority: 26.04.2021 KR 20210001310 U
(71) Applicant: Hurom Co., Ltd., Gimhae-si, Gyeongsangnam-do 50969 (KR)
(72) Inventor: LEE, Cha Woo, Changwon-si Gyeongsangnam-do 51142 (KR)
(74) Representative: Puschmann Borchert Kaiser Klettner Patentanwälte Partnerschaft mbB
(86) International application number: PCT/KR2022/005602
(87) International publication number: WO 2022/231197

(57) **Abstract**

Disclosed are a separable screw and a juicer using the same. The separable screw according to the disclosure includes a first module including a cylindrical main body unit formed with a screw thread on an outer surface thereof and having an inner hollow space, and a plurality of slits formed along a circumference of the main body unit spaced apart from each other; and a second module including a cylindrical main body unit detachably coupled to the inner hollow space and formed with a plurality of ribs inserted in the slits, and a residue discharging guider placed below the main body unit as a ring shape and formed with protrusion protruding from an outer surface thereof in a radial direction and guiding residue to be discharged, wherein juice passes into the screw through a gap between the slit and the rib while the first module and the second module are coupled.

## Description

### [Technical Field]

The disclosure relates to a separable screw and a juicer using the same, and more particularly to a separable screw, in which two separate modules are coupled and juice is separated from a residue while moving into the screw, and a juicer using the same.

### [Background Art]

As interest in health has increased, a juicer that allows individuals to make juice from vegetables, grains, fruits, etc. in person at home has been increasingly used.

In general, the juicer operates by pressing a juicing target with high pressure to squeeze out juice, as in, for example, the 'juice squeezing extractor' disclosed in Korean Patent No. 10-0793852.

A conventional juicer includes a screw that rotates by receiving power from a motor inside a juicing drum and cruses and squeezes a juicing target, and a mesh drum that is disposed between the juicing drum and the screw and separates juice and pomace. Recently, there has been developed a juicer that separates juice and pomace by moving the juice to the inside of the screw without the mesh drum.

### [Disclosure]

### [Technical Problem

An aspect of the disclosure is to provide a separable screw and a juicer using the same, in which juicing is performed without a separate mesh drum, a residue is easily discharged without jamming in a lower side of the screw, thereby improving a juicing efficiency and reducing vibration and noise.

The problems to be solved by the disclosure are not limited to those mentioned above, and other unmentioned problems will become apparent to a person skilled in the art by the following descriptions

### [Technical Solution]

According to an embodiment of the disclosure, a separable screw includes: a first module including a cylindrical main body unit formed with a screw thread on an outer surface thereof and having an inner hollow space, and a plurality of slits formed along a circumference of the main body unit spaced apart from each other; and a second module including a cylindrical main body unit detachably coupled to the inner hollow space and formed with a plurality of ribs inserted in the slits, and a residue discharging guider placed below the main body unit as a ring shape and formed with protrusion protruding from an outer surface thereof in a radial direction and guiding residue to be discharged, wherein juice passes into the screw through a gap between the slit and the rib while the first module and the second module are coupled.

Here, the protrusion may include a plurality of protrusions formed downwards along an outer surface of the residue discharging guider in a circumferential direction.

Here, the protrusion may be formed to be inclined in a vertical direction.

Here, the protrusion may be formed to be inclined in the same direction as the inclined direction of the screw thread.

Here, the protrusion may form a continuous line extending from the screw thread.

Here, a radially protruding height of the screw thread in a lower portion may be equal to or lower than a radially protruding height of the protrusion.

Here, the second module may further include a sweep rib that protrudes from an inner surface thereof in an inward radial direction and stirs juice inside the separable screw.

Here, an inner surface of a blocking plate of the first module may be curved inwards in a radial direction, a fastening protrusion may be formed protruding upwards on a top surface of the residue discharging guider, and the inner surface of the blocking plate may be fitted to a lateral surface of the fastening protrusion.

Further, according to an embodiment of the disclosure, a juicer includes the foregoing separable screw; and a juicing drum accommodating the separable screw therein, and formed with a juice outlet for discharging juice separated by juicing and a residue outlet for discharging a residue, which are spaced apart from each other and provided outside the juicing drum.

Here, the juicing drum may include an inner drum accommodating the separable screw therein to perform juicing; and an outer wall spaced apart from and surrounding an outer circumferential surface of the inner drum.

### [Advantageous Effects]

As described above, the separable screw according to the disclosure serves to not only crush and squeeze a juicing target but also separate juice and residue, thereby having an advantage that the conventional mesh drum is not necessary.

Further, juice flows into the screw through the gap between the slit and the rib when the separable screw is assembled, thereby having an advantage of facilitating cleaning after disassembling the separable screw.

Further, the residue staying in the lower side of the separable screw is effectively discharged by the protrusion of the residue discharging guider in the lower end portion of the separable screw, thereby having an advantage of solving a problem that the stagnation of the residue lowers the juicing efficiency.

Further, the residue staying in the lower side of the separable screw is effectively discharged, thereby having an advantage of reducing vibration and noise due to the stagnation of the residue.

Further, the juicing drum is formed to have a double-walled structure of the inner drum and the outer wall, thereby having an advantage of reducing noise and vibration.

Further, the inner wall of the juicing drum in which the separable screw is accommodated is formed to have a double structure of high hardness, thereby having an advantage of preventing the inner wall of the juicing drum from being damaged.

### [Description of Drawings]

FIGS. 1 and 2 are exploded perspective views of a juicer according to an embodiment of the disclosure.
FIGS. 3 and 4 are exploded perspective views of a separable screw according to an embodiment of the disclosure.
FIGS. 5 and 6 are assembled perspective view of a separable screw according to an embodiment of the disclosure.
FIG. 7 shows an alternative embodiment of a second module in a separable screw according to the disclosure.
FIG. 8 shows another alternative embodiment of a second module in a separable screw according to the disclosure.
FIG. 9 illustrates a gap in a separable screw according to the disclosure.
FIG. 10 illustrates a first inclined surface and a second inclined surface in a separable screw according to the disclosure.
FIG. 11 is a perspective view of a juicing drum according to an embodiment of the disclosure.
FIG. 12 is a cross-sectional view of the juicing drum of FIG. 11.
FIG. 13 is a plan view of the juicing drum of FIG. 11.
FIG. 14 is a cross-sectional view of a juicing drum according to another embodiment of the disclosure.
FIG. 15 is a cross-sectional view partially showing a double-walled juicing drum according to the disclosure.

### [Mode for Carrying out Disclosure]

Specific features of embodiments are involved in the detailed description and the accompanying drawings.

The merits and features of the disclosure, and methods of achieving them will become apparent with reference to the embodiments described below in detail and the accompanying drawings. However, the disclosure is not limited to the embodiments set forth herein, but may be implemented in various forms. The following embodiments are provided in order to fully describe the disclosure and enable those skilled in the art, to which the disclosure pertains, to understand the disclosure, the scope of which is defined in the appended claims. Like numerals refer to like elements throughout.

Below, embodiments of a separable screw and a juicer using the same according to the disclosure will be described with reference to the accompanying drawings.

The disclosure relates to a separable screw 300 and a juicer using the same, in which the functions and arrangement of main components, which make up the juicer, will be described in brief, and then the separable screw 300 and a juicing drum 200 will be described in detail.

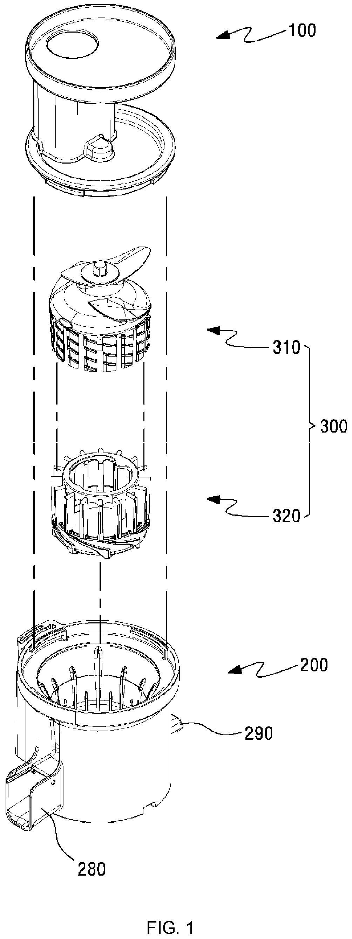

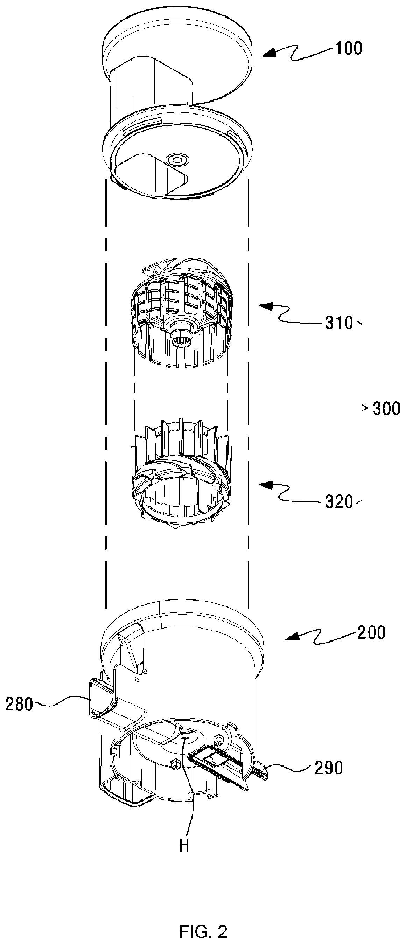

FIGS. 1 and 2 are exploded perspective views of a juicer according to an embodiment of the disclosure.

The juicer according to the disclosure may include a hopper 100, the juicing drum 200, and a separable screw 300.

The hopper 100 may be detachably coupled to the top of the juicing drum 200. A juicing target such as vegetables or fruits may be put into an inlet at the top of the hopper 100 and guided to the juicing drum 200.

The juicing drum 200 is shaped like a cylinder opened upward, and is internally provided with the separable screw 300. On the outer circumferential surface of the juicing drum 200 are arranged a juice outlet 280 for discharging juice separated by juicing, and a residue outlet 290 for discharging residual pomace, in which the juice outlet 280 and the residue outlet 290 are spaced from each other. The juicing target is crushed and squeezed between the separable screw 300 and the juicing drum 200 by the rotation of the separable screw 300, and separated into the juice and the pomace. The juice is moved to the inside of the separable screw 300, spatially separated from the pomace, and discharged to the outside of the juicing drum 200 through the juice outlet 280. In addition, the pomace remaining on the outside of the separable screw 300 is discharged through the residue outlet 290.

The juicing drum 200 is formed with a drum hole H at a lower center thereof. A lower rotary shaft 316 of the separable screw 300 and a driving shaft (not shown) protruding from a main body (not shown) may be coupled through the drum hole H under the juicing drum 200. Therefore, this coupling makes a driving force of a motor be transmitted to the separable screw 300.

As described above, the separable screw 300 is rotated in the juicing drum 200 by receiving the driving force through the driving shaft (not shown), and interacts with the juicing drum 200 to crush and squeeze the juicing target introduced into a space between the juicing drum 200 and the separable screw 300, thereby separating the juicing target into the pomace and the juice. The separable screw 300 according to the disclosure includes the first module 310 and the second module 320 which are detachably separable. Below, the configuration of the separable screw 300 will be described in detail.

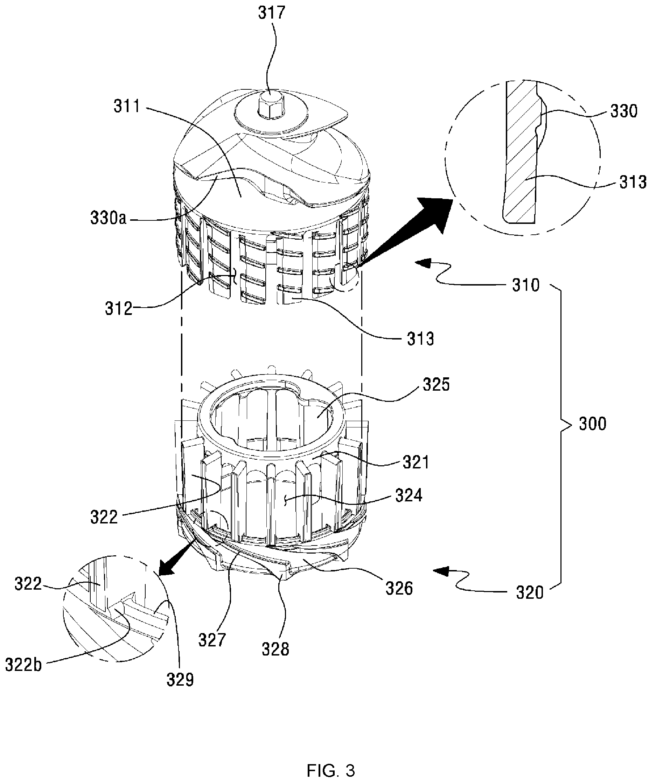

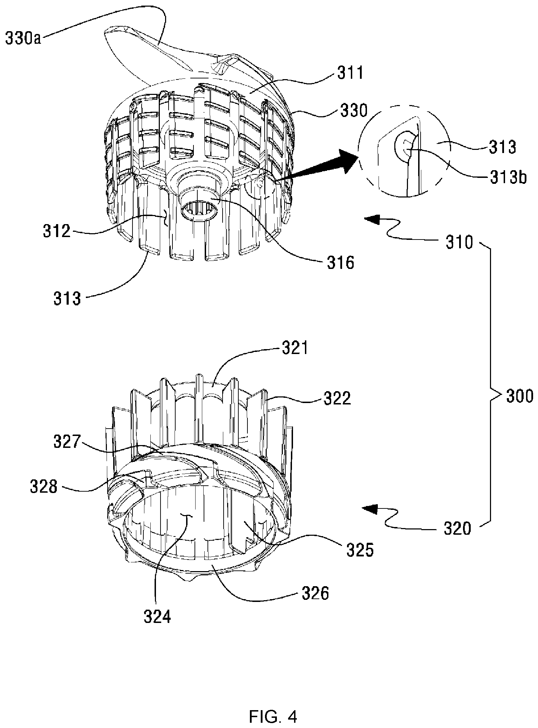

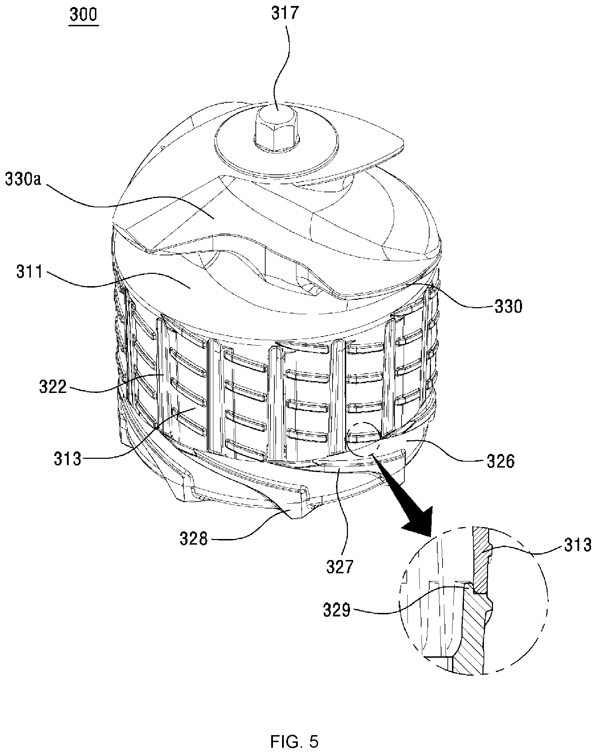

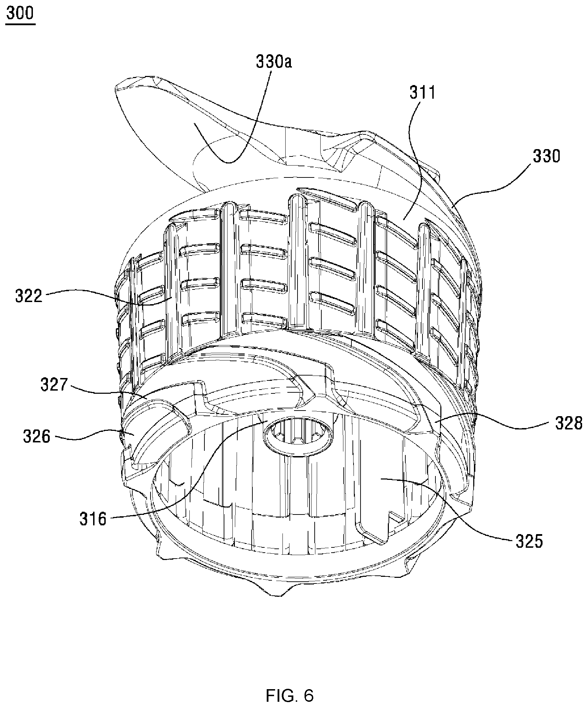

FIGS. 3 and 4 are exploded perspective views of a separable screw according to an embodiment of the disclosure, and FIGS. 5 and 6 are assembled perspective view of the separable screw according to an embodiment of the disclosure.

The separable screw 300 according to an embodiment of the disclosure may include the first module 310 and the second module 320, which are approximately shaped like a cylinder.

The first module 310 may include a main body unit 311 formed to have a hollow cylindrical shape. In more detail, the main body unit 311 is approximately shaped like a cylinder, as shown. The first module 310 may be formed to have a top portion, the diameter of which gradually decreases upwards.

The main body unit 311 is formed to have an open bottom surface and a closed top surface, and includes a screw thread 330 formed on an outer surface. Further, the main body unit 311 may include a screw wing 330a on the outer surface of the top portion thereof. The screw thread 330 may be spirally formed protruding from the outer surface of the main body unit 311, and the screw wing 330a refers to a part of the top portion of the screw thread 330 and has a large protruding height from the top portion of the separable screw 300 to form a spiral wing. The screw wing 330a mainly functions to cut the juicing material and transfer the juicing material downwards along its wing surface, and the screw thread 330 placed below the screw wing 330a and having a relatively small protruding height mainly functions to crush and squeeze the small cut juicing material into smaller pieces, thereby performing the juicing.

The screw thread 330 may include a plurality of screw threads 330 formed on the outer surface of the separable screw 300.

The main body unit 311 may include a plurality of slits 312 formed along a circumferential direction. The slit 312 may be elongated in the form of extending toward the bottom of the main body unit 311 in the direction of the shaft. Between two neighboring slits 312 is formed a blocking plate 313. Therefore, the blocking plate 313 may also include a plurality of blocking plates 313 along the circumferential direction as the plurality of slits 312 are formed along the circumferential direction. The spaces between the slits 312 may be uniform, but are not necessarily limited thereto.

The first module 310 may include the lower rotary shaft 316 formed protruding downward at the center of the hollow thereof. The lower rotary shaft 316 may couple with the driving shaft (not shown) to transmit power.

Further, the first module 310 may include an upper rotary shaft 317 formed on the top thereof and protruding upwards. The upper rotary shaft 317 may be inserted and rotatably supported in a shaft hole formed on the bottom surface of the hopper 100.

The second module 320 may include a main body unit 321 and a residue discharging guider 326.

The main body unit 321 is shaped liked a cylinder and inserted in the hollow space of the first module 310. Therefore, the main body unit 321 of the second module 320 has a slightly smaller diameter than the main body unit 311 of the first module 310.

The main body unit 321 may include a plurality of ribs 322 formed along the circumferential direction and shaped like a rod elongated in the direction of the shaft. Further, the rib 322 according to an embodiment may be formed protruding outward from the outer surface of the main body unit 321 in a radial direction, but is not limited thereto. For example, like the blocking plate 313 of the first module 310, the ribs 322 may be formed between the slits 312.

Because the rib 322 is inserted in the slit 312 of the first module 310, the space between the ribs 322 may be equal to that between the slits 312. In this case, the width of the rib 322 may be slightly smaller than the width of the slit 312.

Between the neighboring ribs 322 may be formed a juice passage hole 324 through which juice moves to the inside of the separable screw 300. When the juice passage hole 324 is formed largely in the space between the neighboring ribs 322, or when the juice passage hole 324 is formed in the entire space between the neighboring ribs 322, the second module 320 may be formed in such a manner that the ribs 322 are extending downwards from a ring- or disc-shaped main body unit 321 provided on the top portion thereof. In other words, according to the shapes of the juice passage hole 324, the main body unit 321 may be formed as a cylinder having a short vertical length (e.g., a ring shape) only on the top portion of the rib 322, or may be formed as a long cylinder corresponding to the entire vertical length of the rib 322.

Further, the lower ends of the plurality of ribs 322 may be additionally supported in the form of a ring. On the other hand, according to an embodiment, the lower ends of the ribs 322 may be formed to be supported on the top surface of the residue discharging guider 326.

The residue discharging guider 326 is formed having a ring shape in a lower portion of the main body unit 321. The diameter of the residue discharging guider 326 may be slightly larger than the diameter of the main body unit 321, and the bottom of the rib 322 protruding radially from the main body unit 321 may be supported on the top surface of the residue discharging guider 326.

On the outer side of the residue discharging guider 326 is formed an outer surface having a predetermined vertical length. The outer surface may be formed with a protrusion 327 protruding radially. As will be described later, when the first module 310 and the second module 320 are coupled, the residue discharging guider 326 forms a bottom portion of the separable screw 300. During a juicing process, the protrusion 327 may push or stir pomace moved to the lower side of the separable screw 300, thereby, together with a projection 328 (to be described later), guiding the pomace to be smoothly discharged

When the lower side of the separable screw 300 is clogged with the pomace, a juicing efficiency may be lowered due to heavy load on the separable screw 300, and noise and vibration may occur. According to the disclosure, the protrusion 327 is employed to more effectively discharge the pomace.

The protrusion 327 may include a plurality of protrusions 327 formed along an outer surface of the residue discharging guider 326 in a circumferential direction, and may be inclined in a vertical direction along the rotational direction of the separable screw 300. Further, the protrusion 327 may be formed extending from the screw thread 330 of the second module 320.

On the bottom of the spirally extending protrusion 327, a plurality of projections 328 may be formed along the circumferential direction. The projection 328 may be formed not extending but separately from the protrusion 327. The projection 328 may be approximately shaped like an inverted triangle as shown, and have an inclined surface at one side in the outward circumferential direction of the separable screw 300. Because a lower portion of the residue discharging guider 326 is inclined inward with a radius decreasing downwards, the projection 328 may be formed to have a protruding height that becomes larger downwards. As the lower portion of the residue discharging guider 326 is inclined inward, a space where pomace is accumulated is relatively largely secured at a lower side of the residue discharging guider 326 compared to an upper side. In this case, the projection 328 functions to sweep the pomace, which is accumulated in the space, downwards.

On an inner surface of the second module 320, a sweep rib 325 is formed protruding in an inward radial direction and elongated in a vertical direction, thereby stirring juice inside the separable screw 300. In this case, a lower portion of the sweep rib 325 protrudes even toward the bottom surface of the juicing drum 200 as shown, thereby preventing the juice from settling to maintain a fresh taste. The lower portion of the sweep rib 325 in an outward radial direction may be spaced apart from the inner surface of the second module 320. Through this space, the juice is allowed to flow, thereby making the juice act as minimum resistance to the rotation of the separable screw 300 when the sweep rib 325 stirs the juice.

The first module 310 and the second module 320 may be detachably coupled, and the rib 322 of the second module 320 is inserted in the slit 312 of the first module 310 as shown in FIG. 5 when the first module 310 and the second module 320 are coupled.

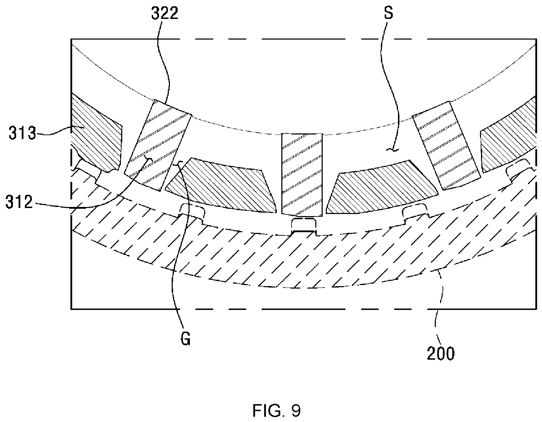

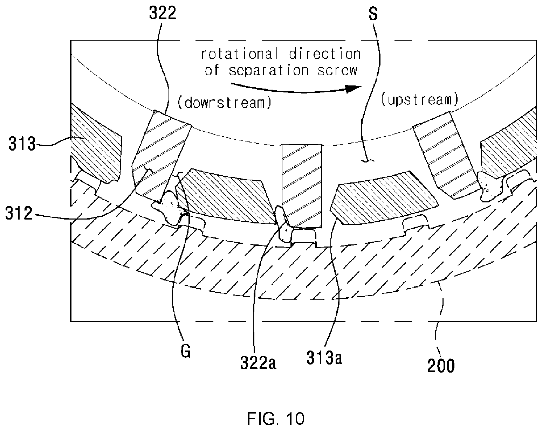

In the separable screw 300 according to the disclosure, as shown in FIGS. 9 and 10, because the width of the rib 322 is slightly smaller than the width of the slit 312, a gap G is formed between the rib 322 and the slit 312 when the first module 310 and the second module 320 are coupled. According to the disclosure, the residue discharging guider 326 having a predetermined vertical thickness is formed in the lower portion of the second module 320, and therefore the gap G formed by the coupling between the slit 312 and the rib 322 may be extended not to the bottom of the separable screw 300 but only up to the top of the residue discharging guider 326.

Juice of a juicing target made between the outer surface of the separable screw 300 and the juicing drum 200 by rotating the separable screw 300 is moved to the inside of the separable screw 300 through the gap G and spatially separated from pomace. In other words, the separable screw 300 may serve to not only crush and squeeze the juicing target while interacting with the juicing drum 200 but also separate the juice and the pomace. Accordingly, it is possible to remove a conventional mesh drum that has been used to separate the juice and the pomace.

In addition, the gap G formed between the blocking plate 313 and the rib 322 is narrow while the first module 310 and the second module 320 of the separable screw 300 are coupled, but the space between the blocking plates 313 of the first module 310 and the space between the ribs 322 of the second module 320 are relatively wide enough to facilitate the cleaning of the separable screw 300 after the first module 310 and the second module 320 are separated.

The diameter of the residue discharging guider 326 may be almost the same as the diameter of the main body unit 311 of the first module 310 so that the outer surface can be formed smoothly when the first module 310 and the second module 320 are coupled. Alternatively, the diameter of the residue discharging guider 326 may be slightly larger than the diameter of the main body unit 311 of the first module 310 so that a stepped portion can be formed on the upper surface of the residue discharging guider 326 when the first module 310 and the second module 320 are coupled.

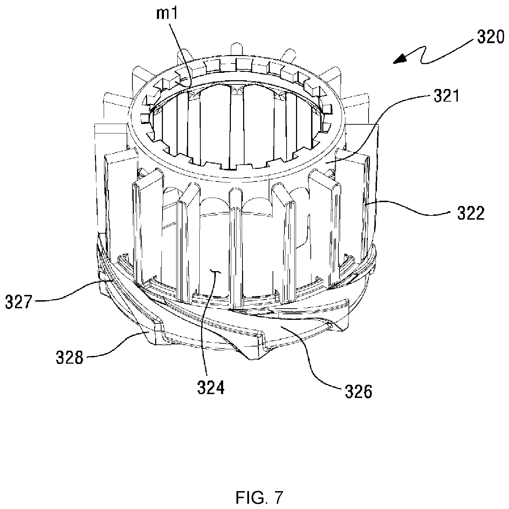

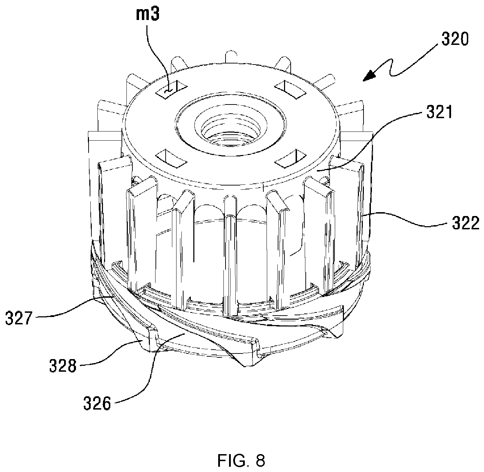

As shown in FIGS. 7 and 8, the main body unit 321 of the second module 320 may be formed to have a ring- or disc-shaped top portion. When the top portion of the main body unit 321 is shaped like a ring, one or more first fitting portions m1 are provided on the inner circumferential surface of the top portion of the main body unit 321 and shaped like projections as shown in FIG. 7, and second fitting portions (not shown) may be provided on the inner surface of the first module 310 and shaped like grooves to engage with the first fitting portions m1.

When the first fitting portion m 1 and the second fitting portion engage with each other, the first module 310 and the second module 320 are prevented from rotating or tilting while being coupled.

The plurality of first fitting portions m1 shaped like projections may be formed along the inner circumferential surface of the ring-shaped top portion of the first module 310 and equidistantly spaced apart from each other, and thus the plurality of second fitting portions may also be formed along the inner surface circumference of the first module 310 and equidistantly spaced apart from each other.

Alternatively, the first fitting portions m1 may be shaped like grooves, and the second fitting portions may be shaped like projections. In addition, the number of first fitting portions m1 and second fitting portions may be adjusted appropriately.

When the top portion of the main body unit 321 is shaped like a disc, one or more third fitting portions m3 are provided on the top surface of the main body unit 321 and shaped like grooves as shown in FIG. 8, and fourth fitting portions (not shown) may be provided on the inner surface of the first module 310 and shaped like projections to engage with the third fitting portions m3.

Like the first fitting portion m1 and the second fitting portion, the third fitting portion m3 and the fourth fitting portion serve to prevent the first module 310 and the second module 320 from rotating or tilting while being coupled. In this case, a hole through which the lower rotary shaft 316 of the first module 310 passes may be formed at the center of the top surface of the main body unit 321.

The third fitting portion m3 and the fourth fitting portion may be variously shaped to engage with each other, and may be appropriately adjusted in number and position.

As shown in the enlarged view of FIG. 3, the inner surface of the blocking plate 313 formed between the slits 312 of the first module 310 or the inner surface of the lower end portion of the blocking plate 313 may be slightly curved and concave toward the inside in a radial direction. Further, a fastening protrusion 329 may be formed protruding from the top surface of the residue discharging guider 326 so that the bottom portion of the blocking plate 313 can be fastened to and supported on the outer surface of the fastening protrusion 329. Therefore, when the bottom portion of the blocking plate 313 is fastened to the outer surface of the fastening protrusion 329, elasticity is exerted in the radial direction due to the slightly concave shape of the bottom portion of the blocking plate 313, thereby increasing friction between the bottom portion of the blocking plate 313 and the fastening protrusion 329. Therefore, the second module 320 is prevented from being easily come out of and decoupled from the first module 310 due to its own weight.

Although not shown, a magnet (not shown) may be disposed inside the top surface of the main body unit 321 of the second module 320, and a magnet having polarity opposite to that of the magnet placed in the second module 320 or a magnetic material may be disposed inside the top surface of the main body unit 311 of the first module 310. In this case, when the first module 310 and the second module 320 are coupled, the magnetic force prevents the first module 310 and the second module 320 from being easily decoupled, thereby maintaining a stable coupling state between the first module 310 and the second module 320.

At least one of the first module 310 and the second module 320 may include one or more spiral screw threads 330 on the outer surface thereof.

The screw threads 330 form a kind of unevenness on the outer surface of the separable screw 300, so that the juicing target can be more effectively crushed, squeezed, and filtered between the separable screw 300 and the juicing drum 200 and smoothly moved to the bottom portion of the juicing drum 200 while the separable screw 300 is rotating.

As described above, the spiral patterns of the screw threads 330 may be continued on the screw wing 330a. Alternatively, the screw threads may be patterned in the form of straight lines intersecting the axial direction of the separable screw 300.

The screw threads 330 may be formed on the outer surfaces of both the first module 310 and the second module 320 (more specifically, the outer surface of the rib 322), and may be formed as continuous patterns on the outer surfaces of the first module 310 and the second module 320 when the first module 310 and the second module 320 are coupled.

The screw threads 330 continuously formed on the outer surfaces of the first module 310 and the second module 320 refer to the screw threads 330 that have substantially continuous patterns rather than physically connected patterns on the outer surfaces of the first module 310 and the second module 320. Therefore, the screw threads 330 may be discontinuously patterned in a partial section where the blocking plate 313 and the rib 322 are adjacent to each other.

The screw threads 330 may be formed to have almost the same heights on the blocking plate 313 and the rib 322 so that the patterns of the screw threads 330 can be as continuous as possible on the outer surfaces of the first module 310 and the second module 320.

In this case, the protrusion 327 of the residue discharging guider 326 may be formed protruding more in the radial direction than the screw thread 330 formed in the lower portion of the separable screw 300. In other words, the protruding height of the screw thread 330 in the lower portion of the separable screw 300 may be equal to or preferably lower than the radially protruding height of the protrusion 327. If the protruding height of the screw thread 330 is higher than that of the protrusion 327, i.e., if the protruding height of the protrusion 327 is lower than the screw thread 330, the effectiveness of the protrusion 327 in pushing out the pomace may be reduced.

The gap G between the slit 312 and the rib 322 may be formed to become wider toward the inside of the separable screw 300 in the radial direction as shown in FIG. 9.

When the gap G is formed to become wider toward the inside of the separable screw 300 in the radial direction, it is possible to prevent problems that the gap G is clogged with the pomace or the flow of the juice is disturbed during the juicing process.

For example, as shown in FIG. 9, by forming the width of the blocking plate 313 to become narrower toward the inside of the separable screw 300 in the radial direction, the gap G formed between the slit 312 and the rib 322 becomes wider toward the inside of the separable screw 300 in the radial direction when the rib 322 is inserted in the slit 312.

Unlike the foregoing example of adjusting the width of the blocking plate 313, the shape of the rib 322 or the shapes of both the rib 322 and the blocking plate 313 may be adjusted in order to form the gap G to become wider toward the inside of the separable screw 300 in the radial direction.

Further, the gap G may be formed to become narrower toward the bottom portion of the separable screw 300 in a lengthwise direction.

The crushed pomace is driven to the bottom portion of the juicing drum 200, and applies relatively larger pressure to the bottom portion of the separable screw 300, and the juicing target is further crushed and becomes smaller toward the bottom portion of the juicing drum 200, thereby increasing possibility that the pomace flows into the separating screw 300 through the gap G at the lower portion of the separating screw 300. Therefore, the gap G is formed to become narrower toward the bottom portion of the separable screw 300 in the lengthwise direction and prevent the residue of the juicing target from being introduced into the separable screw 300, thereby improving a juicing efficiency.

Through the gap G that becomes narrower toward the bottom portion of the separable screw 300 in the lengthwise direction, for example, in the case of a hard juicing target such as a carrot, most of juice is introduced into the separable screw 300 through the gap G positioned at the bottom position of the separable screw 300 during a squeezing process. In addition, in the case of a soft juicing target such as a tomato, the juice is introduced into the separable screw 300 as the juicing target accumulated in the gap G positioned at the bottom portion of the separable screw 300 rises to the gap G positioned at the top portion during the squeezing process.

The gap G may be formed to become narrower gradually from the top portion of the separable screw 300 toward the bottom portion, or may also be formed to have stepwise widths, i.e., a wide width above a certain point and a narrow width below the certain point.

The shape of the gap G in the lengthwise direction of the separable screw 300 may be changed by adjusting the shape of at least one of the blocking plate 313 and the rib 322.

As shown in FIG. 10, the blocking plate 313 may be formed with a first inclined surface 313a at a downstream edge of the outer surface thereof with respect to the rotational direction of the separable screw 300, and the rib 322 may be formed with a second inclined surface 322a at a downstream edge of the outer surface thereof with respect to the rotational direction of the separable screw 300.

By forming the first inclined surface 313a at the downstream edge of the outer surface of the blocking plate 313 and the second inclined surface 322a at the downstream edge of the outer surface of the rib 322, it is possible to prevent the juicing target from jamming in the gap G formed between the blocking plate 313 of the first module 310 and the rib 322 of the second module 320.

In other words, as shown in FIG. 10, while the separable screw 300 is rotating, the pomace moves via the blocking plates 313 and the ribs 322, but does not easily jam in the entrance of the gap G formed between a downstream side of the blocking plate 313 and an upstream side of the rib 322 because the first inclined surface 313a has an effect on widening the entrance of the gap G. Further, the first inclined surface 313a guides the juicing target to a position where the juicing target can reliably collide with the upstream edge of the rib 322 so that the juicing target can be more effectively squeezed and crushed, thereby more effectively preventing the pomace from jamming in the entrance of the gap G. Likewise, the second inclined surface 322a widens the entrance of the gap G formed between a downstream side of the rib 322 and an upstream side of the blocking plate 313 and guides the juicing target to a position where the juicing target can reliably collide with the upstream edge of the blocking plate 313 so that the juicing target can be effectively squeezed and crushed, thereby effectively preventing the pomace from jamming in the entrance of the gap G.

As shown in FIG. 4, the blocking plate 313 may be formed with a first gap maintaining protrusion 313b protruding from an upper lateral portion thereof. As shown in FIG. 3, the rib 322 may be formed with a second gap maintaining protrusion 322b protruding from a lower lateral portion thereof.

During the juicing, the size of the gap G between the blocking plate 313 and the rib 322 may be variable depending on the rotational force generated while the separable screw 300 is rotating at a high speed or the pressure applied from the juicing target to the outer surface of the separable screw 300. The first gap maintaining protrusion 313b and the second gap maintaining protrusion 322b serve to maintain the size of the gap G between the blocking plate 313 and the rib 322 during the juicing process.

Below, the juicing drum 200 of the juicer will be described in detail.

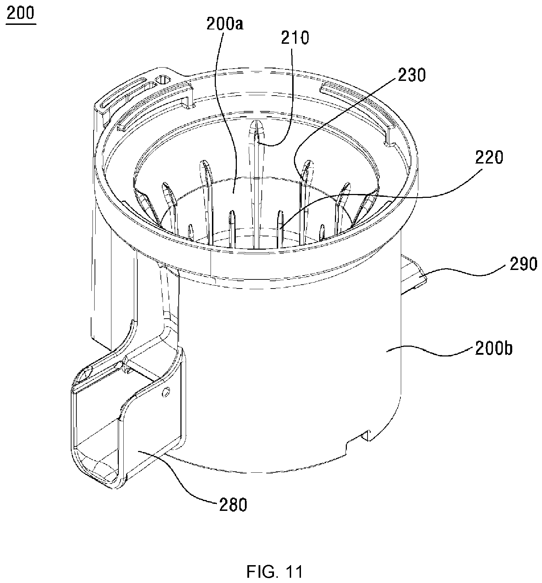

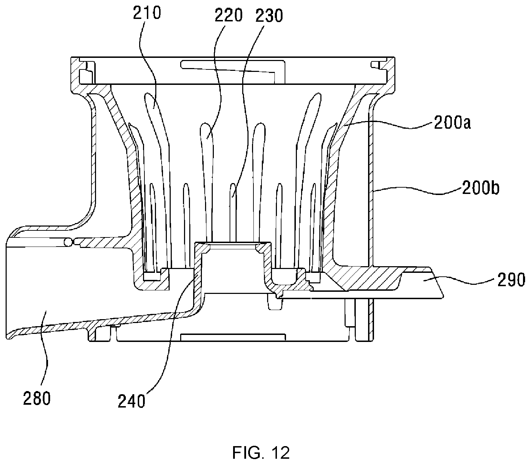

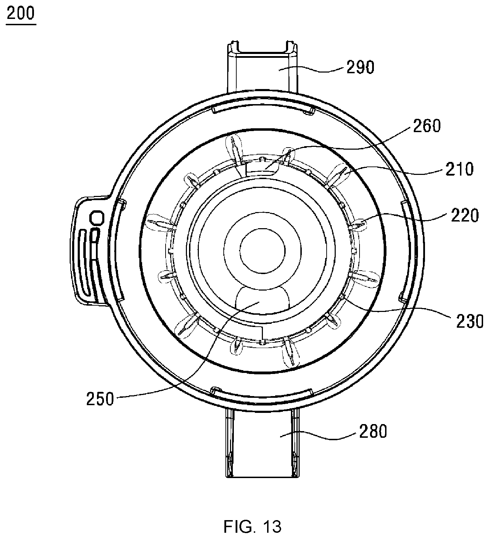

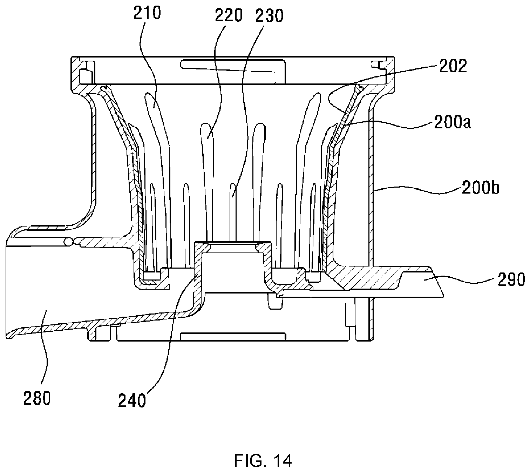

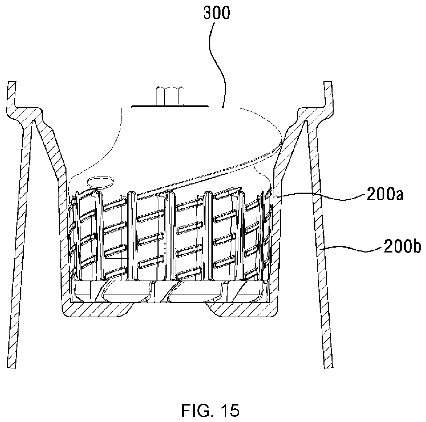

FIG. 11 is a perspective view of a juicing drum according to an embodiment of the disclosure, FIG. 12 is a cross-sectional view of the juicing drum of FIG. 11, FIG. 13 is a plan view of the juicing drum of FIG. 11, FIG. 14 is a cross-sectional view of a juicing drum according to another embodiment of the disclosure, and FIG. 15 is a cross-sectional view partially showing a double-walled juicing drum according to the disclosure.

The juicing drum 200 accommodates the separable screw 300 therein and serves to crush and squeeze a juicing target by the interaction with the separable screw 300. The juicing drum 200 may include a plurality of first rib protrusions 210 protruding from the inner circumferential surface thereof.

The first rib protrusions 210 are disposed being spaced apart from each other along the inner circumferential surface of the juicing drum 200, and each first rib protrusion 210 may be formed being extended along the lengthwise direction of the juicing drum 200 or may be formed being extended and slightly inclined with respect to the lengthwise direction of the juicing drum 200. The first rib protrusion 210 may be formed throughout the lengthwise section of the juicing drum 200.

The first rib protrusion 210 interacts with a screw 300 to more efficiently squeeze and crush a juicing target. The first rib protrusion 210 serves as a kind of fastening protrusion to move the juicing target smoothly by increasing friction with the inner circumferential surface of the juicing drum 200, so that the juicing target can move to the lower portion of the juicing drum 200 without staying.

Further, the first rib protrusion 210 increases squeezing and crushing forces generated against the juicing target. The first rib protrusion 210 on which the juicing target is caught and supported crushes and squeezes the juicing target by interacting with the rotating screw thread 330.

The first rib protrusion 210 may have a uniform protruding height on the inner circumferential surface of the juicing drum 200 over the entire length thereof, but may also have a height gradually lowered from the top portion toward the bottom portion or include at least one middle protrusion (not shown) in the middle portion thereof in the lengthwise direction. The protruding height of the first rib protrusion 210 below the middle protrusion may be lower than the protruding height of the first rib protrusion 210 above the middle protrusion. The position, number and height of the middle protrusion may be varied depending on the formation of the separable screw 300 and the design condition of the screw thread 330.

Further, the juicing drum 200 may include a plurality of second rib protrusions 220 formed on the inner circumferential surface thereof.

Like the first rib protrusions 210, the second rib protrusions 220 are disposed being spaced apart from each other along the inner circumferential surface of the juicing drum 200. The second rib protrusion 220 may be formed being extended along the lengthwise direction of the juicing drum 200 or may be formed being extended and slightly inclined with respect to the lengthwise direction of the juicing drum 200.

The second rib protrusion 220 may be formed throughout a partial section of the juicing drum in the lengthwise direction, for example, to have a length from the bottom portion of the juicing drum 200, which is shorter than the first rib protrusion 210.

The second rib protrusion 220, together with the first rib protrusion 210, increases squeezing and crushing forces generated against the juicing target. The juicing target primarily crushed in the top portion of the juicing drum 200 by the first rib protrusion 210 is further crushed in the bottom portion of the space of the juicing drum 200 by the second rib protrusion 220 together with the first rib protrusion 210, so that the juicing target can be more finely and uniformly crushed.

When the second rib protrusion 220 is formed in not the bottom portion but the middle portion of the juicing drum 200, the juicing target is finely crushed in the middle portion of the juicing drum 200 and its particle size is rapidly decreased, thereby causing a problem that the juicing target is not caught on the inner circumferential surface of the juicing drum 200 in the bottom portion of the juicing drum 200 but rotates along with the separable screw 300. In this case, the juicing target is not smoothly moved to the bottom portion of the juicing drum 200 but stays, thereby causing inconvenience of forcibly pressing the juicing target when the juicing target is additionally put into the juicing drum. On the other hand, when the second rib protrusion 220 is formed in the bottom portion of the juicing drum 200, the particle size of the juicing target is changed step by step so that the juicing target can be smoothly moved to the bottom portion of the space of the juicing drum 200 and the juicing target moved to the bottom portion of the juicing drum 200 can be more finely crushed.

Further, when the second rib protrusion 220 is formed in the bottom portion of the juicing drum 200, the juicing target is smoothly moved from the top portion of the juicing drum 200 to the bottom and the pomace of the juicing target is gradually increased in pressure against the juicing drum 200 and the separable screw 300. This pressure causes the juice of the juicing target to be smoothly introduced into the separable screw 300 through the gap G formed between the blocking plate 313 and the rib 322 of the separable screw 300, and be discharged to the outside of the juicing drum 200.

The first rib protrusion 210 and the second rib protrusion 220 are not necessarily formed along the lengthwise direction of the juicing drum 200, but may be formed to have a certain inclination to the lengthwise direction of the juicing drum 200 to intersect the screw thread 330 spirally formed on the outer surface of the separable screw 300 as long as they can efficiently move and squeeze the juicing target.

The juicing drum 200 may include a plurality of third rib protrusions 230 on the inner circumferential surface thereof. The third rib protrusion 230 may be formed between the first rib protrusions 210 or between the second rib protrusions 220.

Like the first rib protrusion 210 or the second rib protrusion 220, the third rib protrusion 230 may be formed extending along the lengthwise direction of the juicing drum 200, and having a length shorter than the first rib protrusion 210 but longer than the second rib protrusion 220.

When the third rib protrusion 230 is additionally formed, the number of rib protrusions for crushing the juicing target increases in sequence from the top portion toward the bottom portion of the juicing drum 200 in the lengthwise direction. In other words, the juicing target is smoothly moved to the lower portion of the juicing drum 200 while being crushed step by step by the first rib protrusion 210 at the topmost height of the juicing drum 200, by the first rib protrusion 210 and the third rib protrusion 230 at the next height, and by the first rib protrusion 210, the second rib protrusion 220 and the third rib protrusion 230 at the next height.

The lengths, shapes, and inclination angles of the first, second and third rib protrusions 210, 220, and 230 may be appropriately designed as necessary.

At the center of the juicing drum 200, a watertight cylinder 240 may extend upwards from the bottom surface of the juicing drum 200 and be formed with the drum hole H through which the lower rotary shaft 316 passes. The watertight cylinder 240 extending upwards from the bottom surface of the juicing drum 200 prevents juice or the like from leaking out of the juicing drum 200 through the drum hole H.

As shown in FIG. 13, a juice discharging hole 250 for discharging the juice of the juicing target introduced into the separable screw 300 is formed at an inward position of the separable screw 300 on the bottom surface of the juicing drum 200 where the separable screw 300 is seated, and a residue discharging hole 260 for discharging the pomace of the juicing target is formed at an outward position of the separable screw 300 on the bottom surface of the juicing drum 200.

The juice discharging hole 250 communicates with the juice outlet 280 to discharge the juice of the juicing target to the outside of the juicing drum 200, and the residue discharging hole 260 communicates with the residue outlet 290 to discharge the pomace of the juicing target to the outside of the juicing drum 200 separately from the juice.

The juicing drum 200 according to the disclosure may be formed as a double-walled structure that includes an inner drum 200a for accommodating the separable screw 300 therein and an outer wall 200b spaced apart from and surrounding the outer surface of the inner drum 200a.

The juicing drum 200 may be coupled to the upper portion of the main body (not shown) to which a motor is internally mounted and from which the driving shaft (not shown) protrudes. When the juicing drum 200 is coupled to the main body (not shown), an opening space between the inner drum 200a and the outer wall 200b may be closed with the upper surface of the main body (not shown). In this case, the juicing drum 200 may be formed with an opened bottom between the inner drum 200a and the outer wall 200b (see FIG. 15), or may be formed as enclosed at all sides (see FIGS. 12 and 14). When the juicing drum 200 is opened downwards, an enclosed space may be formed with the upper surface of the main body. In any case, a hollow space is formed between the inner drum 200a and the outer wall 200b. In this case, the space filled with air may serve to reduce noise and vibration generated when the separable screw 300 rotates.

In this case, the first rib protrusion 210, the second rib protrusion 220 and the third rib protrusion 230 may be formed inside the inner drum 200a, and the juice outlet 280 and the residue outlet 290 may extend from the inner drum 200a beyond the outer wall 200b. Further, the inner drum 200a and the outer wall 200b are connected at the top portion so that the juicing drum 200 can be formed with a closed upper side and an opened lower side between the inner drum 200a and the outer wall 200b.

Further, as shown in FIG. 14, according to the disclosure, the inner surface of the juicing drum 200 accommodating the separable screw 300 therein may be separately formed as an inner cover module 202 having high hardness. In other words, the inner cover module 202 may be formed of a material different from that of an outer cover module, i.e., a remaining part except for the inner cover module 202.

The inner surface of the juicing drum 200 accommodating the separable screw 300 therein is likely to be damaged because strong pressure is applied thereto during the juicing process. In particular, the inner surface of the juicing drum 200 may be easily damaged when hard and sharp objects such as fruit seeds are put into the juicing drum 200. Therefore, according to the disclosure, the inner surface of the juicing drum 200 accommodating the separable screw 300 therein is separately formed of a material having high hardness, thereby preventing the inner surface of the juicing drum 200 from being damaged.

For example, the inner cover module 202 may be made of ULTEM, and the outer cover module may be made of polyoxymethylene (POM), Tritan or the like material, but they are not limited thereto. In this case, the inner cover module 202 and the remaining outer cover module may be manufactured by insert injection.

Further, the inner cover module 202 and the outer cover module may be transparent so that a user can check the juicing process.

As described above, when the juicing drum 200 is formed to have a double-walled structure of the inner drum 200a and the outer wall 200b, the inner surface of the inner drum 200a may be manufactured as a separate inner cover module 202.

The scope of the disclosure is not limited to the foregoing embodiments but may be implemented in various embodiments within the appended claims. Various modifications that any person having ordinary skill in the art to which the disclosure pertains can make without departing from the gist of the disclosure claimed in the appended claims are considered to be within the scope of the appended claims.

## Claims

1. A separable screw **characterized in** comprising:
a first module comprising a cylindrical main body unit formed with a screw thread on an outer surface thereof and having an inner hollow space, and a plurality of slits formed along a circumference of the main body unit spaced apart from each other; and
a second module comprising a cylindrical main body unit detachably coupled to the inner hollow apace and formed with a plurality of ribs inserted in the slits, and a residue discharging guider placed below the main body unit as a ring shape and formed with protrusion protruding from an outer surface thereof in a radial direction and guiding residue to be discharged,
wherein juice passes into the screw through a gap between the slit and the rib while the first module and the second module are coupled.

2. The separable screw of claim 1, wherein the protrusion comprises a plurality of protrusions formed downwards along an outer surface of the residue discharging guider in a circumferential direction.

3. The separable screw of claim 1, wherein the protrusion is formed to be inclined in a vertical direction.

4. The separable screw of claim 2, wherein the protrusion is formed to be inclined in the same direction as the inclined direction of the screw thread.

5. The separable screw of claim 4, wherein the protrusion forms a continuous line extending from the screw thread.

6. The separable screw of claim 1, wherein a radially protruding height of the screw thread in a lower portion is equal to or lower than a radially protruding height of the protrusion.

7. The separable screw of claim 1, wherein the second module further comprises a sweep rib that protrudes from an inner surface thereof in an inward radial direction and stirs juice inside the separable screw.

8. The separable screw of claim 1, wherein
an inner surface of a blocking plate of the first module is curved inwards in a radial direction,
a fastening protrusion is formed protruding upwards on a top surface of the residue discharging guider, and
the inner surface of the blocking plate is fitted to a lateral surface of the fastening protrusion.

9. A juicer **characterized in** comprising:
the separable screw of any one of claims 1 to 8; and
a juicing drum accommodating the separable screw therein, and formed with a juice outlet for discharging juice separated by juicing and a residue outlet for discharging a residue, which are spaced apart from each other and provided outside the juicing drum.

10. The separable screw of claim 9, wherein the juicing drum comprises
an inner drum accommodating the separable screw therein to perform juicing; and
an outer wall spaced apart from and surrounding an outer circumferential surface of the inner drum.
